# EUROPEAN PATENT APPLICATION

(11) **EP 1 110 990 A2**
(43) Date of publication of application: **27.06.2001**
(21) Application number: 00311171.3
(22) Date of filing: 14.12.2000
(51) Int. Cl.: C08G 77/442, C08G 77/46, C08G 77/50, C08L 101/00

(54) **Fluorine-containing organopolysiloxane, dispersibility-improving agent for fluorocarbon resin powders, and organic resin composition**

(30) Priority: 21.12.1999 JP 36306999
(71) Applicant: Dow Corning Toray Silicone Co., Ltd., Tokyo (JP)
(72) Inventor: Kobayashi, Hideki, Dow Corning Toray Silic.Co.Ltd., Ichihara-shi, Chiba Prefecture (JP); Masatomi, Toru, Dow Corning Toray Silic.Co.Ltd., Ichihara-shi, Chiba Prefecture (JP)
(74) Representative: Kyle, Diana

(57) **Abstract**

A fluorine-containing organopolysiloxane represented by general formula 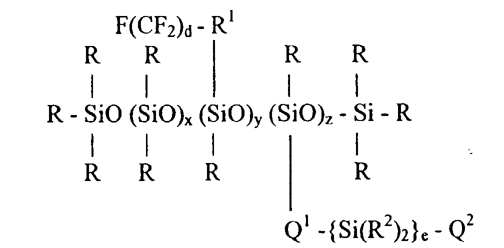 where R is a monovalent hydrocarbon group or a halogen-substituted monovalent hydrocarbon group comprising 1 to 10 carbon atoms, R¹ is selected from the group consisting of an alkylene group, an alkylenoxyalkylene group, or a group produced by inserting =CO or -COO- in an alkylene chain, R² is a monovalent hydrocarbon group or a halogen-substituted monovalent hydrocarbon group comprising 1 to 10 carbon atoms, Q¹ is an alkylene group comprising 1 to 10 carbon atoms, and Q² is an end-blocked polystyrene chain or polymethylstyrene chain with a degree of polymerization of 3 or greater, x is an integer of 0 or greater, y is an integer of 1 or greater, z is an integer of 1 or greater, d is an integer of 3 to 18, and e is 0 or 1. The present invention further comprises a fluorocarbon resin powder dispersibility improving agent consisting of the fluorine-containing organopolysiloxane, where e of the fluorine-containing organopolysiloxane is 0 and an organic resin composition containing such dispersing agent.

## Description

The present invention is concerned with a fluorine-containing organopolysiloxane, a dispersibility improving agent for fluorocarbon resin powders, and an organic resin composition.

Methods for improving the physical properties of fluorocarbon resin powders, such as polytetrafluoroethylene powder etc., by compounding them with organic resins have been known in the past. For example, a process, in which a polytetrafluoroethylene powder was introduced into a polycarbonate resin to produce a polycarbonate resin composition of superior impact resistance, was described in Japanese Laid-Open Patent Application No. Hei 09(1997)-286911. Generally, however, fluorocarbon resin powders exhibit low surface tension which results in problems when trying to uniformly disperse them in organic resins of high surface tension. For this reason, there has been considerable demand for the development of a process for uniformly dispersing fluorocarbon resin powders in organic resins.

As a result of in-depth investigations aimed at overcoming the above-described problems, the authors of the present invention discovered a novel fluorine-containing organopolysiloxane possessing a heretofore-unknown chemical structure and arrived at the present invention by discovering that the above-mentioned problems could be eliminated if the novel fluorine-containing organopolysiloxane was dispersed in organic resins along with fluorocarbon resin powders.

The objects of the present invention are: to provide a novel fluorine-containing organopolysiloxane, to provide a dispersibility improving agent intended for addition to organic resins, and to provide an organic resin composition containing such a dispersibility improving agent for fluorocarbon resin powders and forming uniform and transparent coatings of superior surface lubricity.

The present invention comprises a fluorine-containing organopolysiloxane represented by general formula 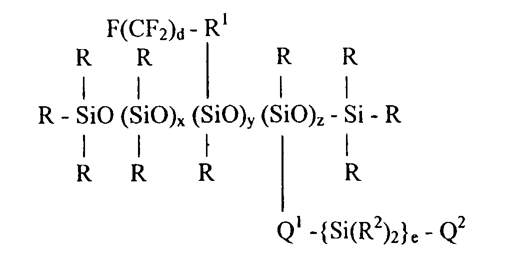 where R is a monovalent hydrocarbon group or a halogen-substituted monovalent hydrocarbon group comprising 1 to 10 carbon atoms, R¹ is selected from the group consisting of an alkylene group, an alkylenoxyalkylene group, and a group comprising =CO or -COO- inserted in an alkylene chain, R² is a monovalent hydrocarbon group or a halogen-substituted monovalent hydrocarbon group comprising 1 to 10 carbon atoms, Q¹ is an alkylene group comprising 1 to 10 carbon atoms, Q² is an end-blocked polystyrene chain or polymethylstyrene chain with a degree of polymerization of 3 or greater, x is an integer of 0 or greater, y is an integer of 1 or greater, z is an integer of 1 or greater, d is an integer of 3 to 18, and e is 0 or 1. The present invention further comprises a fluorocarbon resin powder dispersibility improving agent consisting of the fluorine-containing organopolysiloxane where e of the fluorine-containing organopolysiloxane is 0, and an organic resin composition containing such dispersing agent.

The invention is further described with reference to the accompanying drawings wherein:

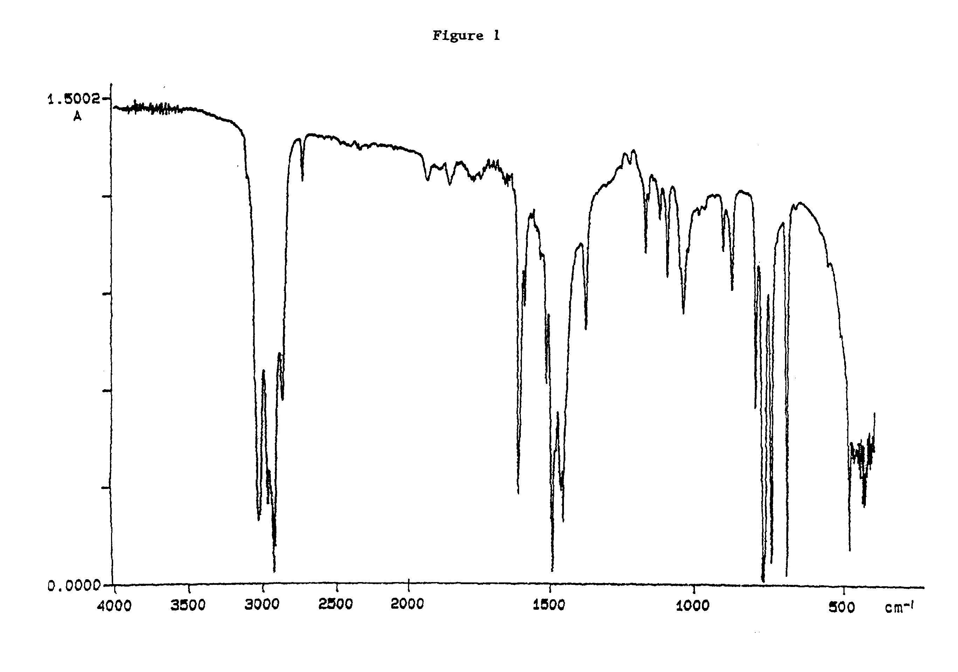

FIG. 1 is an FT-IR spectrum chart of the fluorine-containing organopolysiloxane obtained in Application Example 1; and

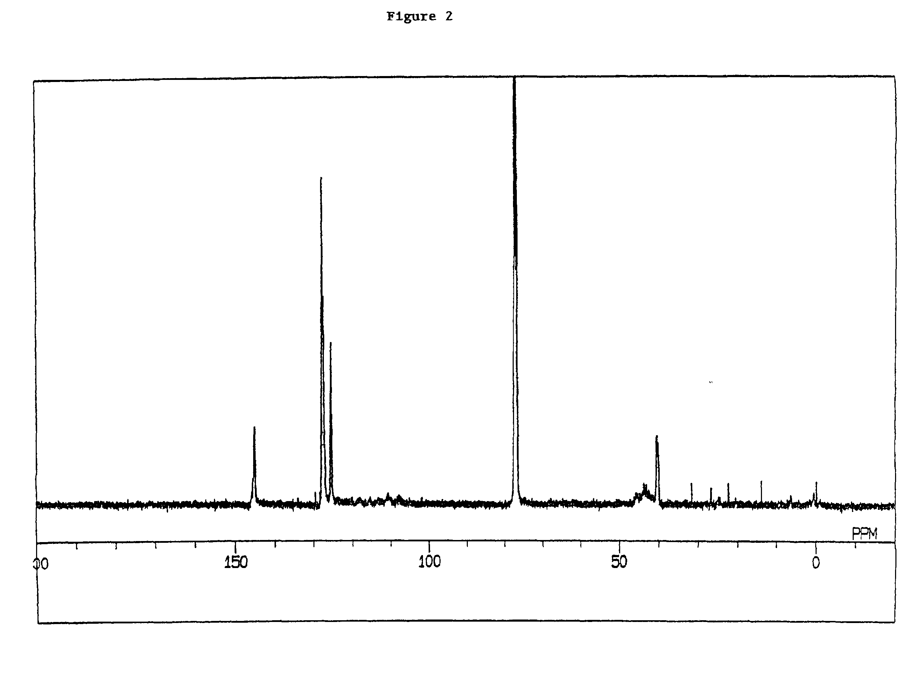

FIG. 2 is a ¹³C-NMR spectrum chart of the fluorine-containing organopolysiloxane obtained in Application Example 1.

The present invention comprises a fluorine-containing organopolysiloxane represented by general formula 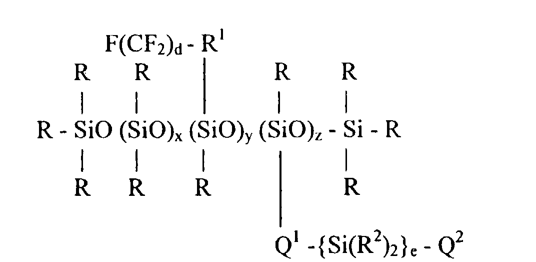 where R is a monovalent hydrocarbon group or a halogen-substituted monovalent hydrocarbon group comprising 1 to 10 carbon atoms, R¹ is selected from the group consisting of an alkylene group, an alkylenoxyalkylene group, and a group comprising =CO or -COO- inserted in an alkylene chain, R² is a monovalent hydrocarbon group or a halogen-substituted monovalent hydrocarbon group comprising 1 to 10 carbon atoms, Q¹ is an alkylene group comprising 1 to 10 carbon atoms, Q² is an end-blocked polystyrene chain or polymethylstyrene chain with a degree of polymerization of 3 or greater, x is an integer of 0 or greater, y is an integer of 1 or greater, z is an integer of 1 or greater, d is an integer of 3 to 18, and e is 0 or 1. The present invention further comprises a fluorocarbon resin powder dispersibility improving agent consisting of the fluorine-containing organopolysiloxane where e of the fluorine-containing organopolysiloxane is 0, and an organic resin composition containing such dispersing agent.

In the above formula, R is a monovalent hydrocarbon group or a halogen-substituted monovalent hydrocarbon group comprising 1 to 10 carbon atoms, with the monovalent hydrocarbon groups exemplified by methyl, ethyl, propyl, butyl, 2-ethylhexyl, dodecyl, octadecyl, and other alkyl groups; vinyl, allyl, and other alkenyl groups; phenyl, naphthyl, and other aryl groups, and halogen-substituted monovalent hydrocarbon groups exemplified by chloromethyl, 3,3,3-trifluoropropyl, difluoromonochloropropyl, and other substituted alkyl groups. R¹ is selected from the group consisting of an alkylene group, an alkylenoxyalkylene group, or a group comprising =CO or -COO- inserted in an alkylene chain; with ethylene and propylene as suitable examples of the alkylene groups, and the alkylenoxyalkylene groups of R¹ exemplified by ethylenoxyethylene, ethylenoxypropylene, and propylenoxypropylene. R² is a monovalent hydrocarbon group or a halogen-substituted monovalent hydrocarbon group comprising 1 to 10 carbon atoms. Examples of R² include methyl, ethyl, propyl, butyl, and other alkyl groups; phenyl, tolyl, and other aryl groups; and groups obtained by substituting fluorine atoms or chlorine atoms for some of the hydrogen atoms of these groups. Q¹ is an alkylene group comprising 1 to 10 carbon atoms exemplified by ethylene, propylene, and hexylene and Q² is an end-blocked polystyrene chain or polymethylstyrene chain with a degree of polymerization of three or greater. The end-blocking groups of the polystyrene and polymethylstyrene chain are exemplified by methyl, ethyl, propyl, butyl, pentyl, hexyl, and other alkyl groups, as well as by the phenyl group. The subscript x is an integer of zero or greater, y is an integer of 1 or greater, z is an integer of 1 or greater, d is an integer of 3 to 18, and e is 0 or 1.

The fluorine-containing organopolysiloxane is exemplified by the compounds represented by the average composition formulas shown hereinbelow. Although one of ordinary skill in the art would understand what is meant by "average" in this type of context, for clarity's sake it is spelled out now that this "average" is a molar average determined so as to account for variability in the number and type of organosiloxane subunits in the molecules in question.

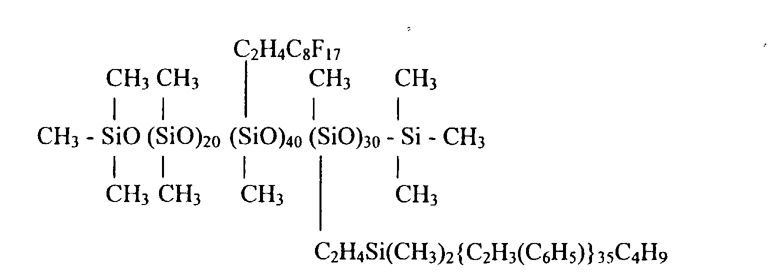

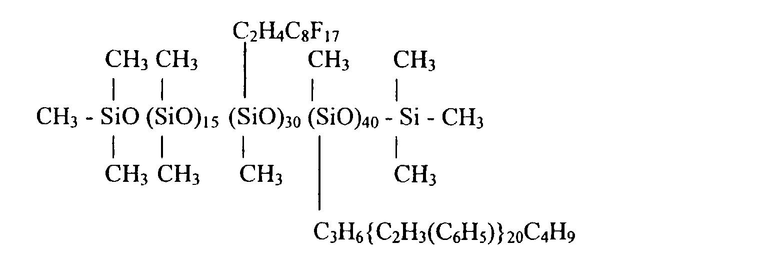

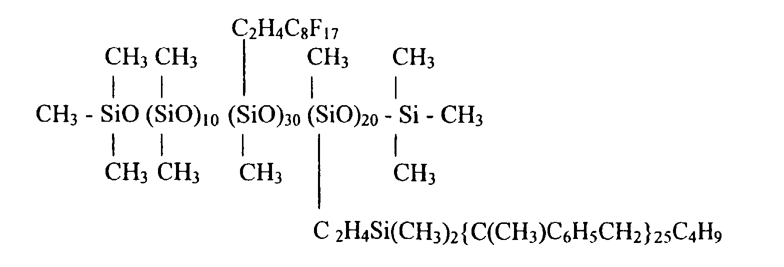

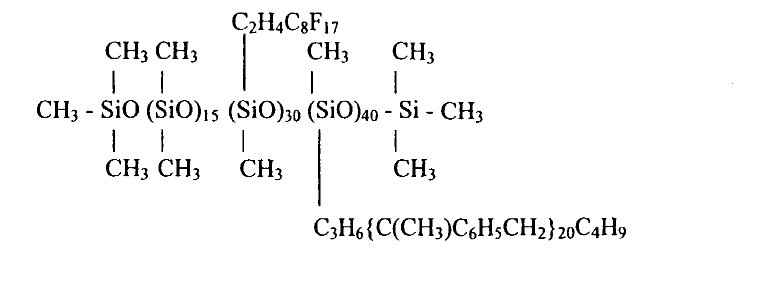

This fluorine-containing organopolysiloxane can be produced by subjecting a compound represented, for example, by the formula

Q³-{Si(R²)₂}ₑ-Q²

where R², Q²,and e are the same as described above, Q² is an end-blocked polystyrene chain or polymethylstyrene chain with a degree of polymerization three or greater, and Q³ is an alkenyl group comprising 1 to 10 carbon atoms, where, Q³ is exemplified by vinyl, propyl, and butenyl, and the end-blocking groups of the polystyrene and polymethylstyrene are exemplified by methyl, ethyl, propyl, butyl, and other alkyl groups to an addition reaction with a polysiloxane represented, for example, by the general formula 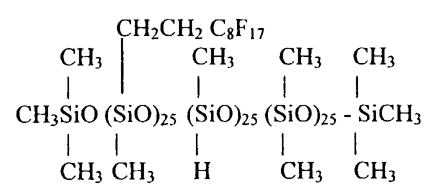 in the presence of a hydrosilation catalyst, such as chloroplatinic acid.

The fluorocarbon resin powder dispersibility-improving agent of the present invention is the aforementioned fluorine-containing organopolysiloxane in which the value for subscript e is zero. The molecular weight of the fluorine-containing organopolysiloxane serving as such a fluorocarbon resin powder dispersibility improving agent is preferably in the range of from 1,000 to 1,000,000, and, especially preferably, in the range of from 10,000 to 100,000. In addition, the content of fluorine atoms in the fluorine-containing organopolysiloxane is preferably 1∼70 wt%, and, especially preferably, 5∼50 wt%. If the content of fluorine atoms is less than 1 wt%, the fluorine-containing organopolysiloxane does not readily exhibit its dispersion stabilizing functionality, whereas when it exceeds 70 wt% its compatibility with organic resin decreases.

The above-described fluorocarbon resin powder dispersibility-improving agent is useful as an agent improving the dispersibility of fluorocarbon resin powders in organic resins because it improves the dispersibility of fluorocarbon resin powders in organic resins and stabilizes their dispersibility. In this case, the amount of this component is typically in the range of 0,1∼30 parts by weight per 100 parts by weight of the fluorocarbon resin powder dispersed in the organic resin.

The reason why the present fluorocarbon resin powder dispersibility improving agent improves the dispersibility of fluorocarbon resin powders in organic resins is uncertain. But, it is believed that the dispersibility is due in part to the fact that the fluorine-containing organopolysiloxane acts to impede the agglomeration of the fluorocarbon resin powder along with promoting the dispersion of fluorocarbon resin powder in organic resin because the fluorine-containing organic groups of the fluorine-containing organopolysiloxane exhibit compatibility with fluorocarbon resin powders while the polystyrene chains or polymethylstyrene chains exhibit affinity for organic resins, and, in addition, the principal chain of the organosiloxane is highly flexible.

The present organic resin composition is obtained by introducing the above-described fluorocarbon resin powder dispersibility-improving agent with a fluorocarbon resin powder into an organic resin. To explain this in greater detail, the content of the dispersibility improving agent for fluorocarbon resin powders is typically in the range of 0.1∼30 parts by weight per 100 parts by weight of the fluorocarbon resin powder. The fluorocarbon resin powders used in the composition are exemplified by tetrafluoroethylene resin powder, trifluorochloroethylene resin powder, tetrafluoroethylene-hexafluoroethylene-propylene resin powder, vinyl fluoride resin powder, vinylidene fluoride resin powder, and difluorodichloroethylene resin powder. The content of the fluorocarbon resin powder is preferably in the range of 0.01∼60 parts by weight per 100 parts by weight of the organic resin.

The organic resins are exemplified by bisphenol-A type or bisphenol-Z type polycarbonate resins and other polycarbonate resins, acrylate resins, methacrylate resins, styrene resins, co-polymers of styrene and (meth)acrylates, such as methyl acrylate and methyl methacrylates, siloxane-crosslinked acrylic resins, organosilicon resins, polyester resins, polyurethane resins, polyallylate resins, and polysulfone resins. The above-mentioned resins can be used singly or as a combination of several resins.
The present organic resin composition can be readily produced by mixing the above-described fluorocarbon resin powder dispersibility-improving agent, a fluorocarbon resin powder, and an organic resin in a mixer such as the Ultradisperser, the Nanomizer, the MicroFluidizer, the Ultimizer, ultrasonic dispersing machines, the Henschel mixer, kneader-mixers, continuous kneading extruders, and other mixing equipment. In addition, pigments, fillers, anti-oxidants, heat resistance-imparting agents, weatherability improvers, mold lubricants, flame retardants, etc. can be introduced in the organic resin composition of the present invention.

### Examples

Next, the present invention will be explained in detail by referring to application examples. In the application examples, the term "part(s)" means "part(s) by weight." Additionally, a particle size analyzer (from Coulter Electronics, Inc., Coulter Model N4MD) was used in the application examples in order to measure the average particle size of fluorocarbon resin powders dispersed in organic resins.

Application Example 1. 3.23g Polyorganosiloxane (called "P1" hereinbelow) represented by the average composition formula 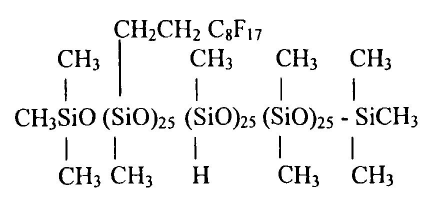 20 ppm chloroplatinic acid (as a 5% isopropyl alcohol solution), 18.9g polystyrene represented by the formula

CH₂=CHSi(CH₃)₂{C₂H₃(C₆H₅)}₃₅C₄H₉,

and 80g *m*-xylene hexafluoride were combined in a flask and slowly heated. Subsequently, the reaction was continued for 6 hours at a temperature of 80°C. After that, the pressure was reduced to 20 Torr at 140°C to elute the organic solvent and low-boiling components. The resultant product was analyzed using ²⁹Si-NMR, ¹³C-NMR, and FT-IR. It was found that the resulting white solid product was a fluorine-containing organopolysiloxane (hereinbelow called "P2") represented by the following average composition formula

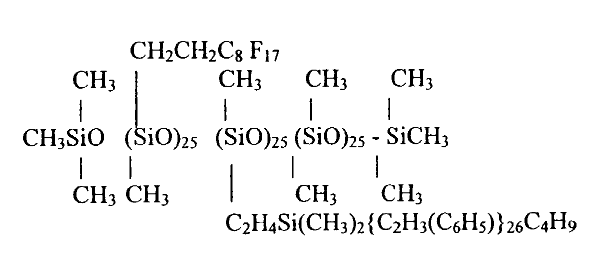

Application Example 2. A fluorine-containing organopolysiloxane (hereinbelow called "P3") represented by the following average composition formula was obtained in the same manner as in Application Example 1, with the exception of using 18.7g polystyrene represented by the formula (2)

CH₂=CHCH₂{C₂H₃(C₆H₅)}₃₅C₄H₉,

instead of 18.9g of the polystyrene represented by formula (1) which was used in Application Example 1. The product was a white solid represented by the following average compositional formula

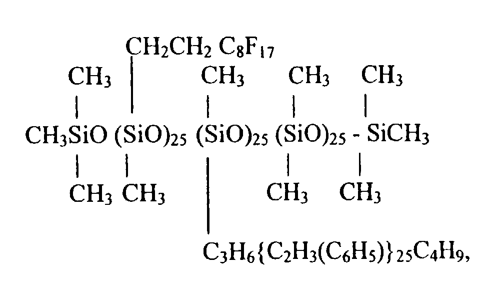

Application Example 3. Ten parts bisphenol-Z type polycarbonate resin (available from Mitsubishi Gas Chemical Co., Inc., trade name Z200) was dissolved in 100 parts chlorobenzene. One part tetrafluoroethylene resin powder (available from Daikin Industries, Ltd., trade name Lublon L-2, primary particle size: 5 *µ*m, secondary particle size: 0.3 *µ*m) and 0.1 parts of the fluorine-containing organopolysiloxane obtained in Application Example 1 ("P2") were added and mixed with this solution. A MicroFluidizer (from Mizuho Kogyo K.K., model M-110Y) was used to mix the ingredients of the mixture at 10000 psi, obtaining a uniform dispersed solution. The dispersion was placed in a glass vial, and left stand for 10 minutes. Subsequent visual examination of its external appearance revealed no separation into a liquid layer and a sediment layer. Measurements revealed that the particle size of the particles (of the tetrafluoroethylene resin powder) dispersed in this dispersed solution was 160 nm. The solution was applied to a slide glass and dried in an oven, obtaining a uniform transparent coating film. The results of the measurements are shown in Table 1.

Application Example 4. A dispersion was prepared in the same manner as in Application Example 3, with the exception of using 0.2 parts of the fluorine-containing organopolysiloxane ("P3"). The dispersion was placed in a glass vial, and left stand for 10 minutes. Subsequent visual examination of its external appearance revealed no separation into a liquid layer and a sediment layer. Measurements revealed that the particle size of the particles of the tetrafluoroethylene resin powder dispersed in this dispersed solution was 170 nm. The solution was applied to a slide glass and dried in an oven, obtaining a uniform transparent coating film. The results of the measurements are shown in Table 1.

Comparative Example 1. A dispersion of polycarbonate resin was prepared in the same manner as in Application Example 1, with the exception that the fluorine-containing organopolysiloxane ("P2") was not added. The dispersion was placed in a glass vial, and left stand for 10 minutes. Subsequent visual examination of its external appearance revealed separation into a liquid layer and a sediment layer. Measurements revealed that the particle size of the particles dispersed in the dispersion was 1270 nm. The solution was applied to a slide glass and dried in an oven, obtaining a non-uniform grayish-white coating film. The results of the measurements are also shown in Table 1.

**Table 1**

| | Application Example 3 | Application Example 4 | Comparative Example 1 |
|---|---|---|---|
| Condition of Dispersion | Excellent | Excellent | Poor |
| Separation into liquid layer and sediment layer | None | None | Present |
| Average particle size (nm) | 160 | 170 | 1270 |
| Condition of Coating Film | Uniform | Uniform | Non-uniform |

## Claims

1. A fluorine-containing organopolysiloxane represented by general formula (I): 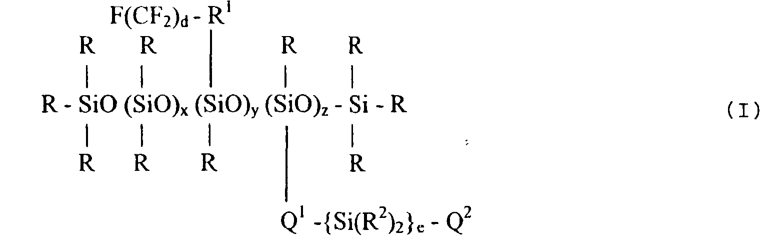 where R is a monovalent hydrocarbon group or a halogen-substituted monovalent hydrocarbon group comprising 1 to 10 carbon atoms, R¹ is an alkylene group, an alkyleneoxyalkylene group, or a group comprising =CO or -COO- inserted in an alkylene chain, R² is a monovalent hydrocarbon group or a halogen-substituted monovalent hydrocarbon group comprising 1 to 10 carbon atoms, Q¹ is an alkylene group comprising 1 to 10 carbon atoms, Q² is an end-blocked polystyrene chain or polymethylstyrene chain with a degree of polymerization of 3 or greater, x is an integer of 0 or greater, y is an integer of 1 or greater, z is an integer of 1 or greater, d is an integer of 3 to 18, and e is 0 or 1.

2. The fluorine-containing organopolysiloxane according to claim 1, in which e is zero.

3. The fluorine-containing organopolysiloxane according to claim 1 or 2, wherein x+y+z is five or greater.

4. An organic resin composition comprising fluorocarbon resin powder, an organic resin, and a fluorine-containing organopolysiloxane as defined in claim 2.

5. The organic resin composition according to claim 4, wherein x+y+z is 5 or greater.

6. The organic resin composition according to claim 4 or 5, wherein the fluorine-containing organopolysiloxane has a molecular weight of 1,000 to 1,000,000.

7. The organic resin composition according to claim 6, wherein the fluorine-containing organopolysiloxane has a molecular weight of 10,000 to 100,000.

8. The organic resin composition according to any of claims 4 to 7, wherein the fluorine-containing organopolysiloxane comprises 1 to 70 weight percent fluorine atoms.

9. The organic resin composition according to claim 8, wherein the fluorine-containing organopolysiloxane comprises 5 to 50 weight percent fluorine atoms.

10. The organic resin composition according to any of claims 4 to 9, comprising 0.1 to 30 parts by weight of the fluorine-containing organopolysiloxane per 100 parts by weight of the fluorocarbon resin powder.

11. The organic resin composition according to any of claims 4, 8 and 10, wherein the fluorine-containing organopolysiloxane has an average composition formula 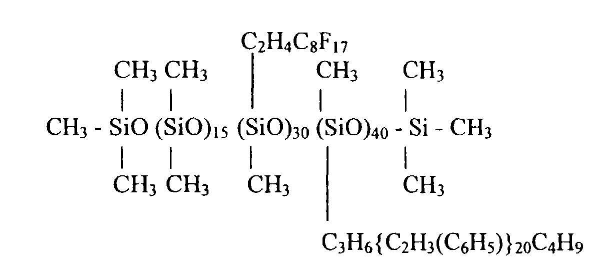 or

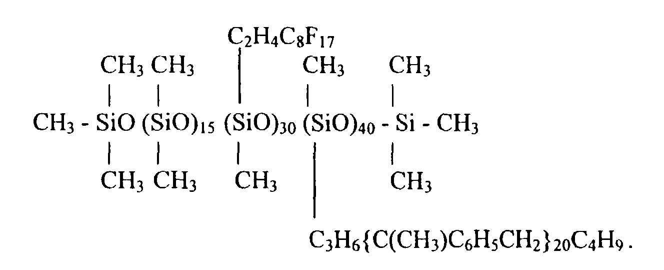

12. The fluorine-containing organopolysiloxane according to claim 1 having an average compositional formula selected from:
